# EUROPEAN PATENT APPLICATION

(11) **EP 1 244 309 A1**
(43) Date of publication of application: **25.09.2002**
(21) Application number: 01250107.8
(22) Date of filing: 24.03.2001
(51) Int. Cl.: H04N 7/24

(54) **A method and microprocessor system for forming an output data stream comprising metadata**

(71) Applicant: DEUTSCHE THOMSON-BRANDT GMBH, 78048 Villingen-Schwenningen (DE)
(72) Inventor: Hepper, Dietmar Dipl.-Ing., 30419 Hannover (DE)
(74) Representative: Hartnack, Wolfgang, Dipl.-Ing.

(57) **Abstract**

A method and an electronic system for forming an output data stream are provided. A corresponding input data stream contains service information that is extracted and transformed into metadata. The service information and the content data comprised in the input data stream are used for generating an output data stream. For example the invention can be used to generate an MPEG-2 output data stream with TV-Anytime /XML metadata based on DVB-SI service information contained in the input data stream.

## Description

The present invention relates to a method and an electronic system for forming an output data stream, in particular for applications to the DVB-SI, TV-Anytime, MPEG-7 and XML standards using the MPEG-2 format as a transport medium.

### Background

From the prior art a variety of formats for the digital transmission of data is known. The MPEG-2 format is a popular message format for the transmission of digital broadcasting. It has been standardised by the International Standard Organization/International Electrotechnical Commission, Moving Picture Experts Group, ISO/IEC 13818 (MPEG-2). The MPEG-2 standard can be used in conjunction with the DVB-SI standard (Digital Video Broadcasting - Service Information). Some satellite broadcasting systems are currently using MPEG-2 and DVB-SI.

US-A-6 040 850 shows a method for interfacing between a transmitter and a receiver of a digital broadcasting system using a satellite. That method relies on an event information table and a network information table contained in the DVB-SI data to perform a recording, and for inserting a price information descriptor table and a caption information descriptor into the event information table.

US-A-6 175 577 shows a transmission system for transmitting a flexible multiplex signal. A plurality of programs is transmitted in the MPEG-2 format. Each program consists of a plurality of elementary streams, which are multiplexed on a transport stream by a multiplexer. In order to be able to find the different elementary streams, which form a program, several tables are used. The tables can change over time and are updated by information present in the transport stream.

Another emerging standard is the "TV-Anytime" standard, which is defined by the TV-Anytime Forum. The TV-Anytime Forum has published metadata specifications that define the attractors and data structures that allow consumers to find, navigate and manage content. The term "metadata" encompasses data that is descriptive about content, such as program title and synopsis.
Such metadata is also referred to as "attractors" because it can attract a consumer to content. Attractors allow consumers to find, navigate and manage content from various sources. In addition to attractors metadata as defined by TV-Anytime also includes information about user preferences and history. User preference information, such as favourite actors or TV-shows, is included within the scope of TV-Anytime metadata to allow software agents to select content on the consumer's behalf.

### Invention

The metadata representation format is a specification of how TV-Anytime metadata is represented in the extensible mark-up language XML. However the TV-Anytime metadata is not restricted to XML but can also be encoded in a binary format for transmission or storage. Details of the metadata specification are published in the document SP003V10 of 16 February 2001, which is available on the web-site 'www.tv-anytime .org'. So far no transport mechanism is disclosed for the metadata within the scope of the TV-Anytime specification.

The manner in which the metadata is stored, accessed and used on a personal digital recorder (PDR) is not specified.

A problem to be solved by the invention is to provide an improved method and microprocessor system for forming a corresponding output data stream. This problem is solved by applying the respective features of the independent claims. Preferred embodiments of the invention are set forth in the dependent claims.

The invention allows converting service information SI, such as DVB-SI, which is contained in an input data stream. The input data stream can be of any kind, such as data streams transmitted via satellite, internet and/or cable networks in a variety of formats. The service information contained in the input data stream can be converted into a descriptive metadata representation.

In a preferred embodiment of the invention the format of the descriptive representation is the TV-Anytime metadata format that is based on XML. For example, an input data stream of the MPEG-2 format comprising DVB-SI service information data is analysed and the service information data is searched, retrieved and evaluated.

The invention allows creating additional descriptive metadata - such as metadata of the TV-Anytime format - in accordance with the target syntax. The metadata conveys the complete service information or a subset of the service information. The subset of the service information can be selected automatically or manually by an operator or agent.

The invention is advantageous in that it allows easing the generation of metadata at e.g. the provider side.

The invention allows to embed the metadata into an output data stream to convey the metadata as a part of the data stream to a user, e.g. via a broadcast channel or the Internet.

Alternatively the data stream can also be provided upon a user's specific request for storage and/or rendering on a personal digital recorder (PDR). The metadata received by the user can comprise additional metadata that was not contained in the original DVB-SI data. The additional metadata can be received from a variety of data sources, such as internal or external databases, the Internet or by user input operation.

Advantageously, the invention allows facilitating the creation of descriptive information that is also referred to as metadata, for multimedia content. This minimises the need for user interaction and eases the generation of such metadata at the provider's site at the same time.

Based on the extended metadata provided to a user, additional features can be supported on the user's personal digital recorder such as search and navigation features or other useful features relating to the program selection and/or the user interface relying on the metadata.

In principle, the inventive method is suited for forming an output data stream including metadata, the method including the steps of:
- providing an input data stream comprising service information;
- extracting the service information from the input data stream;
- transforming at least some of the service information into metadata;
- outputting the output data stream and the metadata.

In principle, the inventive microprocessor system includes microprocessor means adapted for carrying out the steps of this method.
In principle, the inventive computer program product is stored on a computer usable medium and includes computer readable program means for causing an electronic system to perform this method when the program is run on that electronic system.

### Drawings

Exemplary embodiments of the invention are described with reference to the accompanying drawings, which show in:
- Fig. 1: flow chart of an embodiment of a method for forming an output data stream in accordance with the invention;
- Fig. 2: block diagram of an embodiment of the electronic system in accordance with the invention;
- Fig. 3: a table for illustrating the mapping of service data of the DVB-SI data format to the TV-Anytime / XML data format.

### Exemplary embodiments

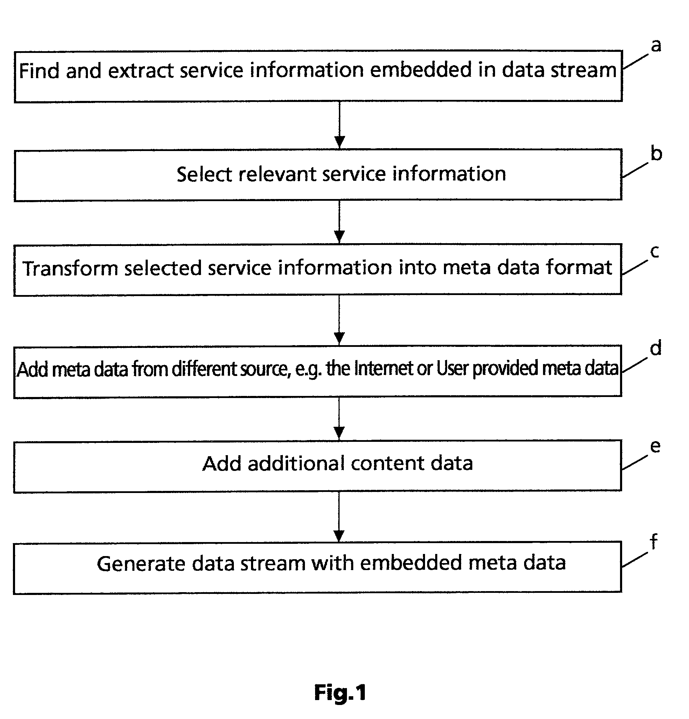

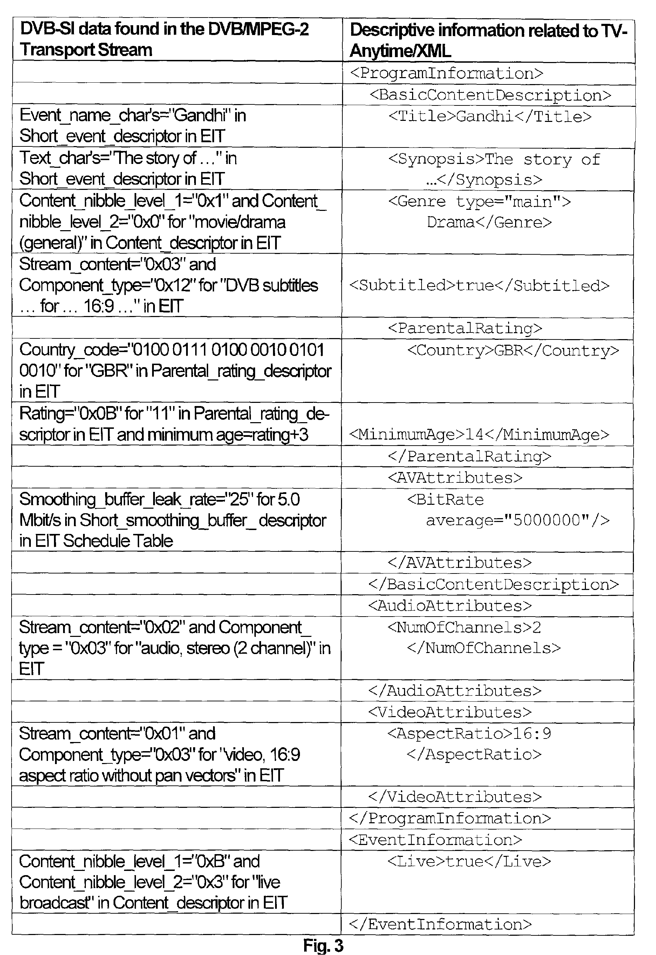

Fig. 1 shows a flow chart for transforming an input data stream into an output data stream. For example the input data stream can have the MPEG-2 data format and comprises DVB-SI service data. However it is to be noted that the invention is not restricted to these data formats but is applicable broadly to all data formats allowing transporting service information.
In step a) the service information that is embedded in the input data stream is identified and extracted. In step b) the relevant service information is selected. This can be done in accordance with predefined settings, such as a user profile. The settings specify the service information that is considered to be relevant.
In step c) the selective service information is transformed into a metadata format. Again it is to be noted that the invention is not restricted to a specific metadata format. On the contrary, the invention is applicable to any metadata format, such as the TV-Anytime metadata format or other metadata formats used in streaming technologies, such as Real Networks G2 server / real player, Microsoft net show server / player, Apple quick time server / player and IBM video charger / player. The mapping is performed in accordance with a predefined mapping table which assigns specific data format elements of the format in which the service information is received to corresponding elements of the target syntax, such as TV-Anytime / XML. The mapping is explained in greater detail with respect to an instance of a mapping table as depicted in Fig. 3.
In step d) additional descriptive metadata can be added. The additional metadata can be provided by a user or by performing a database query via Internet or an intranet. This step allows adding other relevant data that are considered useful by the service provider and/or the user. Examples for such additional metadata include critics from other users, rating, information on actors and/or on related events.
In step e) additional content data is added to the input data stream. The additional content data can be an additional TV program that is added by the service provider. In this case corresponding additional metadata is also added to the data stream.
In step f) a data stream is generated with the embedded metadata. In the example considered here the metadata is accommodated by the MPEG-2 transport technology. In most cases it replaces the original DVB-SI service information.

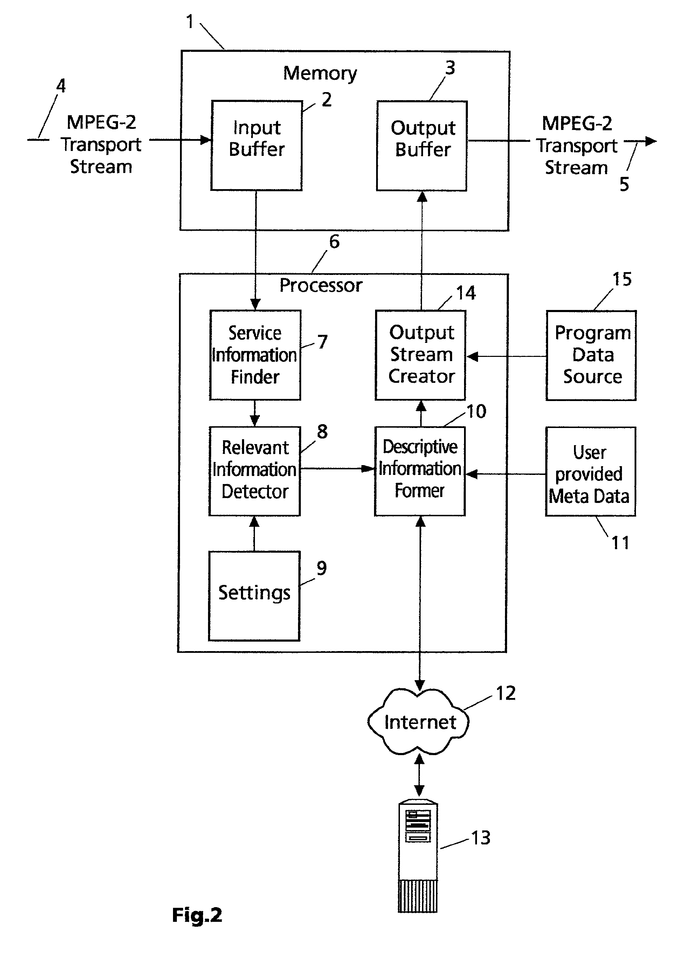

Fig. 2 shows a block diagram of an electronic system. The electronic system includes a memory 1 having an input buffer 2 and an output buffer 3. The input buffer 2 is coupled to a data channel 4, receiving an input data stream such as an input data stream in the MPEG-2 format.
Likewise the output buffer 3 is coupled to a data channel 5 for outputting an output data stream. In the example considered here the output data stream, too, is of the MPEG-2 format. It is also possible to choose a data format for the output data stream that is different to the data format of the input data stream.
The electronic system further includes a processor 6, which has a processor component 7, which is coupled to the input buffer 2. The processor component 7 serves to identify service information in the input data stream.
Processor 6 further includes a processor component 8 for the detection of relevant service information. Processor component 8 is coupled to the processor component 7 and receives service information identified by the processor component 7 at its input. Furthermore, the processor component 8 is coupled to an information source, e.g. a file 9. This file contains the settings specifying which service information is relevant.
The output of the processor component 8 is coupled to a processor component 10. Processor component 10 has a further input receiving user-provided metadata 11, and has an interface for coupling it to the Internet 12. This way the processor component 10 can connect for instance to a server or client computer 13.
For example the processor component 10 can access the computer 13 via the Internet in order to perform a database query of a database stored on the computer 13 in order to retrieve data that relate to the content received by the input data stream over the data channel 4. Based on the relevant service information provided by the processor component 8 and based on the additional data provided by the user and/or data retrieved from the computer 13 the processor component 10 generates the resulting metadata.
Such metadata is output from the processor component 10 to a processor component 14 that integrates the metadata and the original content data for forming an output data stream.

It is also possible to filter out certain content and/or to add additional content using a program data source 15. This way it is possible to filter out undesired content, such as undesired television programs, from the input data stream and to add additional content such as an additional TV program provided by the program data source 15. The resulting output data stream is output by processor component 14 and is received by an output buffer 3 from where it is output on data channel 15.

It is to be noted that the electronic system of Fig. 2 can be used at any point of the transmission path of the data stream. For example the electronic system can be used by a provider for generating an output data stream that is broadcast to a variety of users, or in response to a specific request received from an individual user. In the latter case the specific user request and/or the user's individual profile determines the settings of file 9.

The electronic system of Fig. 2 can also form part of a user device such as a personal or network digital recorder. In this case the metadata is stored locally on the user's behalf. This can be useful for the implementation of search and navigation features on a user device.

Further it is to be noted that the output data stream provided by the processor component 14 to the output buffer 3 can be sent on request. For example the electronic system of Fig. 2 can be implemented on an Internet server computer. When a user connects to the server computer he or she can request a particular TV program for streaming. The corresponding output data stream can already be present in the output buffer 3 such that the streaming operation to the end-user can start immediately.

As an alternative to embedding the metadata and the content data into the same output data stream it is also possible to provide the content and the metadata separately. For example the content can be provided by means of the MPEG-2 transport technology, such as via satellite, whereas the metadata is provided to the end-user device through an internet connection.

Fig. 3 shows an example of the mapping of DVB-SI service data to metadata of the TV-Anytime /XML data format. Each data item of the DVB-SI service information given in this example is translated into corresponding information in the TV-Anytime / XML format.

## Claims

1. Method for forming an output data stream (4) including metadata, the method including the steps of:
- providing (a) an input data stream comprising service information;
- extracting (b) the service information from the input data stream;
- transforming (c) at least some of the service information into metadata;
- outputting (5) the output data stream and the metadata.

2. The method of claim 1, the input data stream being of the MPEG-2 format.

3. The method of claim 1 or 2, the service information being of the DVB-SI format.

4. The method of claim 1, 2 or 3, the step of extracting the service information being performed in accordance with user defined settings.

5. The method of anyone of the preceding claims, the metadata having an extensible mark-up language target syntax format, such as a TV-Anytime and/or an XML type format.

6. The method of anyone of the preceding claims, further including adding (d) user and/or Internet (12) provided data to the metadata.

7. The method of anyone of the preceding claims, further including filtering (14) of the content data comprised in the input data stream in order to filter out undesired content.

8. The method of anyone of the preceding claims, further comprising adding (e) additional content data for the generation of the output data stream.

9. Computer program product stored on a computer usable medium, including computer readable program means for causing an electronic system to perform a method according to anyone of the preceding claims 1 to 8 when the program is run on that electronic system.

10. Microprocessor system including microprocessor means adapted for carrying out the steps of anyone of the claims 1 to 8.
